# EUROPÄISCHE PATENTSCHRIFT

(11) **EP 2 227 400 B1**
(45) Veröffentlichungstag und Bekanntmachung des Hinweises auf die Patenterteilung: **25.05.2011**
(21) Anmeldenummer: 08869456.7
(22) Anmeldetag: 04.11.2008
(51) Int. Cl.: B60G 17/0165, B60G 17/018

(54) **VERFAHREN ZUR STEUERUNG EINES KRAFTFAHRZEUG-FAHRWERKS**
METHOD FOR CONTROLLING A MOTOR VEHICLE CHASSIS
PROCÉDÉ DE COMMANDE POUR CHÂSSIS DE VÉHICULE AUTOMOBILE

(30) Priorität: 10.01.2008 DE 102008003920
(43) Veröffentlichungstag der Anmeldung: 15.09.2010
(73) Patentinhaber: Continental Teves AG & Co. oHG, 60488 Frankfurt (DE)
(72) Erfinder: HOINKHAUS, Hermann, 30938 Burgwedel (DE); RIECKMANN, Andreas, 30989 Gehrden (DE)
(86) Internationale Anmeldenummer: PCT/EP2008/064901
(87) Internationale Veröffentlichungsnummer: WO 2009/086962

(56) Entgegenhaltungen:
- EP-A- 0 795 429
- DE-C2- 4 126 731
- GB-A- 2 270 889

## Beschreibung

Die Erfindung betrifft ein Verfahren zur Steuerung eines Kraftfahrzeug-Fahrwerks, bei dem zumindest an einer Fahrzeugsachse an der Radaufhängung jedes Fahrzeugrades jeweils ein Schwingungsdämpfer mit verstellbarer Dämpfungskraft zwischen der ungefederten Masse des Fahrzeugrades und der gefederten Masse des Fahrzeugaufbaus und parallel dazu ein Wegsensor zur Erfassung des Dämpferwegs angeordnet ist, wobei zur adaptiven Steuerung der Dämpfungskraft des Schwingungsdämpfers aus dem erfassten Wegsignal des Wegsensors ein Geschwindigkeitssignal abgeleitet wird.

Die Verwendung von Schwingungsdämpfern mit verstellbarer Dämpfungskraft in Kraftfahrzeug-Fahrwerken ist schon seit längerem bekannt. So ist z.B. in der DE 33 04 833 C2 ein hydraulischer Schwingungsdämpfer mit variabler Dämpfungswirkung beschrieben, bei dem ein in dem Dämpferkolben angeordneter zweiter Strömungskanal mittels eines Zylinderdrehschiebers in seinem Strömungswiderstand stufenweise verstellbar ist. Hierzu ist der Zylinderdrehschieber umfangsseitig mit mehreren, vorzugsweise vier Drosselöffnungen mit unterschiedlich großen Querschnitten versehen und mittels eines ansteuerbaren Elektromotors in bestimmte Drehpositionen ausrichtbar, in denen sich jeweils eine der Drosselöffnungen in Überdeckung mit dem Strömungskanal befindet.

Aus der DE 10 2005 004 969 A1 ist dagegen ein pneumatischer Schwingungsdämpfer mit variabler Dämpfungskraft bekannt, bei dem mindestens ein von mehreren in dem Dämpferkolben angeordneten Strömungskanälen mit einem steuerbaren Ventil mit kontinuierlich verstellbarem Öffnungsquerschnitt versehen ist. Das steuerbare Ventil besteht im wesentlichen aus einem feststehenden Segmentelement mit mehreren umfangsseitig verteilt angeordneten Kreisflächen-Winkelsegmenten und einem ebensolchen Segmentdrehschieber, dessen Winkelsegmente durch eine Drehung des Segmentdrehschiebers kontinuierlich über die Segmentlücken des feststehenden Segmentelementes schiebbar sind.

Die Einstellung einer bestimmten Dämpfungskraft an den Schwingungsdämpfern eines Kraftfahrzeugs erfolgt im einfachsten Fall manuell, indem ein Fahrer z.B. mittels eines Handschalters, ausgehend von einer mittleren Standardeinstellung, eine komfortabelweiche Einstellung mit einer verringerten Dämpfungskraft der Schwingungsdämpfer oder eine sportlich-harte Einstellung mit einer erhöhten Dämpfungskraft der Schwingungsdämpfer wählt. Alternativ oder zusätzlich dazu ist jedoch auch eine Verstellung der Dämpfungskraft der Schwingungsdämpfer in Abhängigkeit von äußeren Betriebsparametern, wie z.B. der Fahrgeschwindigkeit, des Lenkeinschlags oder der Querbeschleunigung möglich. So ist beispielsweise in der genannten DE 33 04 833 C2 vorgesehen, dass die über einen Handwahlschalter manuell vorgebbare Dämpfereinstellung automatisch in Abhängigkeit von der sensorisch erfassten Fahrgeschwindigkeit verändert wird, indem die manuell gewählte Dämpfereinstellung bei Unterschreiten einer unteren Grenzgeschwindigkeit um eine Stufe in Richtung weich und bei Überschreiten einer oberen Grenzgeschwindigkeit um eine Stufe in Richtung hart geändert wird.

Für eine zeitgenaue, also an die aktuelle Schwingungsphase der Radaufhängungen eines Kraftfahrzeugs angepasste Einstellung der Schwingungsdämpfer ist jedoch die Erfassung der momentan an dem Fahrzeugaufbau und an den Fahrzeugrädern auftretenden Vertikalbewegungen, insbesondere der Vertikalgeschwindigkeiten, erforderlich. Die entsprechenden Vertikalgeschwindigkeiten können durch die Integration von Aufbau- und Radbeschleunigungssignalen oder durch die Differentiation von Dämpferwegsignalen ermittelt werden, die mittels Beschleunigungssensoren bzw. Wegsensoren erfassbar sind.

In einer entsprechenden Anordnung und einem zugeordneten Verfahren zur adaptiven Steuerung der Dämpfungskraft der Schwingungsdämpfer eines Kraftfahrzeug-Fahrwerks nach der US 3,807,678 ist beispielsweise vorgesehen, dass die Dämpfungskraft eines Schwingungsdämpfers proportional zu der nahe der Radaufhängung ermittelten absoluten Vertikalbeschleunigung des Fahrzeugaufbaus erhöht wird, wenn die vertikale Absolutgeschwindigkeit des Fahrzeugaufbaus und die Relativgeschwindigkeit des betreffenden Schwingungsdämpfers gleichgerichtet sind (Absolutbewegung des Fahrzeugaufbaus nach oben und Relativbewegung des Fahrzeugrades nach unten / Schwingungsdämpfer in Zugstufe oder Absolutbewegung des Fahrzeugaufbaus nach unten und Relativbewegung des Fahrzeugrades nach oben / Schwingungsdämpfer in Druckstufe), und dass die Dämpfungskraft minimiert wird, wenn die vertikale Absolutgeschwindigkeit des Fahrzeugaufbaus sowie die Relativgeschwindigkeit des Schwingungsdämpfers entgegengerichtet sind (Absolutbewegung des Fahrzeugaufbaus nach oben und Relativbewegung des Fahrzeugrades nach oben / Schwingungsdämpfer in Druckstufe oder Absolutbewegung des Fahrzeugaufbaus nach unten und Relativbewegung des Fahrzeugrades nach unten / Schwingungsdämpfer in Zugstufe).

In einem weiteren bekannten Verfahren gemäß der US 4,821,849 wird unter Vermeidung von Beschleunigungssensoren eine ähnliche Funktionalität erreicht, indem die Dämpfungskraft eines Schwingungsdämpfers proportional zu der Relativgeschwindigkeit des Schwingungsdämpfers erhöht wird, wenn der Dämpferweg (Relativweg zwischen Fahrzeugaufbau und Fahrzeugrad) und die Relativgeschwindigkeit des betreffenden Schwingungsdämpfers entgegengerichtet sind (zweiter Teil der Zugstufe oder der Druckstufe mit abnehmender Relativgeschwindigkeit), und indem die Dämpfungskraft minimiert wird, wenn der Dämpferweg und die Relativgeschwindigkeit des Schwingungsdämpfers gleichgerichtet sind (erster Teil der Zugstufe oder der Druckstufe mit zunehmender Relativgeschwindigkeit). Der Dämpferweg wird jeweils mittels eines parallel zu dem zugeordneten Schwingungsdämpfer angeordneten Wegsensors erfasst. Die jeweilige Relativgeschwindigkeit des Schwingungsdämpfers wird bevorzugt durch eine Differentiation des Wegsignals des zugeordneten Wegsensors ermittelt.

Um aus dem Wegsignal eines den Dämpferweg erfassenden Wegsensors ein für eine adaptive Steuerung des zugeordneten Schwingungsdämpfers geeignetes Geschwindigkeitssignal ableiten zu können, ist eine Reduzierung des Wegsignals auf die für die Schwingungsdämpfung relevanten Signalanteile durch eine Filterung erforderlich, da das Wegsignal üblicherweise mit einem durch einen geänderten Beladungszustand und eine langsame Signaldrift hervorgerufenen Konstantanteil und mit einem zumeist höherfrequenten Rauschanteil belastet ist.

Als wesentliche Anteile einer Fahrwerksschwingung sind die Schwingungen im Bereich der fahrzeugspezifischen Eigenfrequenzen des Fahrzeugaufbaus von etwa 0,8 bis 1,3 Hz und des Fahrzeugrades von etwa 10 bis 20 Hz anzusehen. Zur Eliminierung der vorgenannten Störanteile ist daher in einem aus der DE 41 26 731 C2 bekannten Verfahren vorgesehen, das Wegsignal mit einer weitgehend linearen Filterfunktion zu filtern, deren untere Grenzfrequenz etwa bei dem 0,1 bis 0,5-fachen der Eigenfrequenz des Fahrzeugaufbaus liegt, und deren obere Grenzfrequenz etwa das 1,2 bis 2-fache der Eigenfrequenz des Fahrzeugrades beträgt. Da bei diesem bekannten Verfahren die verwendete Filterfunktion und deren Parameter jedoch unabhängig von den Signaleigenschaften, also der Amplituden und Frequenzen der jeweils momentan vorherrschenden Fahrwerksschwingungen starr festgelegt ist, ist das aus dem derart gefilterten Wegsignal durch Differentiation ermittelte Geschwindigkeitssignal nicht geeignet, um daraus für alle auftretenden Fahrwerksschwingungen, insbesondere für Fahrwerksschwingungen mit kleiner Amplitude, eine optimale Einstellung der Dämpfungskraft der Schwingungsdämpfer abzuleiten.

Ein Verfahren mit den Merkmalen des Oberbegriffs des Anspruchs 1 ist aus GB-A-2 270 889 bekannt.

Der vorliegenden Erfindung liegt daher die Aufgabe zugrunde, ein Verfahren zur Steuerung eines Kraftfahrzeug-Fahrwerks der eingangs genannten Art anzugeben, mit dem zur adaptiven Steuerung der Dämpfungskraft eines Schwingungsdämpfers ein sensorisch erfasstes Wegsignal in verbesserter Weise aufbereitet und daraus ein Geschwindigkeitssignal zur optimalen Einstellung der Dämpfungskraft des Schwingungsdämpfers abgeleitet werden kann.

Diese Aufgabe ist in Verbindung mit den Merkmalen des Oberbegriffs des Anspruchs 1 dadurch gelöst, dass zur Ableitung des Geschwindigkeitssignals (v) aus dem Wegsignal (s) die folgenden Schritte durchgeführt werden:
a) Hochpassfilterung des Wegsignals (s → s_{HP}),
b) Analyse des hochpassgefilterten Wegsignals (s_{HP}),
ca) Ermittlung von Adaptionsparametern einer adaptiven Tiefpassfilterung des hochpassgefilterten Wegsignals (s_{HP}),
cb) Ermittlung von Adaptionsparametern einer adaptiven Differentiation des hochpass- und tiefpassgefilterten Wegsignals (s_{HP/TP}),
d) Adaptive Tiefpassfilterung des hochpassgefilterten Wegsignals (s_{HP} → s_{HP/TP}),
e) Adaptive Differentiation des hochpass- und tiefpassgefilterten Wegsignals (s_{HP/TP} → v).

Vorteilhafte Ausgestaltungen und Weiterbildungen des erfindungsgemäßen Verfahrens sind Gegenstand der Ansprüche 2 bis 15.

Die Erfindung geht von einem Fahrwerk eines Kraftfahrzeugs aus, das zumindest an einer Fahrzeugsachse an der Radaufhängung jedes Fahrzeugrades jeweils einen Schwingungsdämpfer mit verstellbarer Dämpfungskraft zwischen der ungefederten Masse des Fahrzeugrades und der gefederten Masse des Fahrzeugaufbaus sowie parallel dazu ein Wegsensor zur Erfassung des Dämpferwegs angeordnet hat.

Erfindungsgemäß wird zur Ableitung des Geschwindigkeitssignals (v) aus dem Wegsignal (s) des Wegsensors zunächst eine Hochpassfilterung des Wegsignals (s) durchgeführt (s → s_{HP}). Hierdurch wird ein Offset des Wegsignals (s) korrigiert, der von einem beladungsabhängig geänderten Ruheniveau des Wegsignals (s) und von einer niederfrequenten Signaldrift des Wegsensors hervorgerufen sein kann. Zudem wird durch die Hochpassfilterung eine negative Phasenverschiebung, also eine Phasenvoreilung des hochpassgefilterten Wegsignals (s_{HP}) erzeugt, die unter Berücksichtigung einer üblicherweise vorhandenen Schaltzeit des betreffenden Stellelementes zur phasenrichtigen Umschaltung bzw. Änderung der Dämpfungskraft des Schwingungsdämpfers genutzt werden kann.

Zur Hochpassfilterung des Wegsignals (s) kann prinzipiell eine Hochpassfilterfunktion beliebiger Struktur und Ordnung verwendet werden. Zur Begrenzung des Rechenaufwands und zur Vermeidung einer Verzerrung des hochpassgefilterten Wegsignals (s_{HP}) wird jedoch bevorzugt eine lineare Hochpassfilterfunktion 1. Ordnung für die Hochpassfilterung des Wegsignals (s) verwendet.

Um eine unerwünschte Dämpfung des Wegsignals (s) im Bereich der Eigenfrequenz (f_{R_K}) des Fahrzeugaufbaus zu vermeiden, liegt die Grenzfrequenz (f_{0_HP}) der zur Hochpassfilterung des Wegsignals (s) verwendeten Hochpassfilterfunktion zweckmäßig in etwa bei dem 0,1 bis 0,5-fachen der Eigenfrequenz (f_{R}__{K}) des Fahrzeugaufbaus und somit in einem hinreichend großen Frequenzabstand zur Eigenfrequenz (f_{R_K}).

Nach der Hochpassfilterung des Wegsignals (s → s_{HP}) erfolgt die Analyse des hochpassgefilterten Wegsignals (s_{HP}), worunter im wesentlichen die Ermittlung der Signaleigenschaften, also der Schwingungsamplituden und Schwingungsfrequenzen, der dominierenden Schwingungen des Wegsignals (s_{HP}) zu verstehen ist.

Die Amplituden der dominierenden Schwingungen des hochpassgefilterten Wegsignals (s_{HP}) werden bevorzugt aus einer Hüllkurve ermittelt, die aus dem Betragsverlauf des hochpassgefilterten Wegsignals (s_{HP}) abgeleitet wird, indem das durch die Hüllkurve gebildete Ausgangssignal bei unterhalb einer festgelegten Toleranzschwelle (Δs_{T}) liegendem, durch das hochpassgefilterte Wegsignal (s_{HP}) gebildetem Eingangssignal gleich Null gesetzt wird, bei oberhalb der Toleranzschwelle (Δs_{T}) ansteigendem Eingangssignal dem Eingangssignal folgt, bei außerhalb der Toleranzschwelle (Δs_{T}) abfallendem Eingangssignal für eine festgelegte Haltezeit (Δt_{H}) auf dem Wert des letzten relativen Maximums gehalten wird, und nach Ablauf der Haltezeit Δt_{H} bei über der Toleranzschwelle (Δs_{T}) liegendem Eingangssignal auf den aktuellen Wert des Eingangssignals und bei unterhalb der Toleranzschwelle (Δs_{T}) liegendem Eingangssignal gleich Null gesetzt wird.

Durch die Verwendung der Hüllkurve in Verbindung mit der Toleranzschwelle (Δs_{T}) und der Haltezeit (Δt_{H}) wird eine künstliche Hysterese zur Hervorhebung der dominierenden Schwingungen und zur Rauschunterdrückung erzeugt, so dass Schwingungen mit höherer Amplitude, die im Frequenzbereich der Eigenfrequenzen (f_{R_K}, f_{R}__{R}) des Fahrzeugaufbaus und der Fahrzeugräder liegen, mit relativ hoher Genauigkeit erfasst werden können. Hierzu ist die Haltezeit (Δt_{H}) der Hüllkurve zweckmäßig etwas größer als die halbe Schwingungsdauer (T_{R_K}) der kleinsten relevanten Schwingungsfrequenz (f_{R_K}) festgelegt, die durch die Eigenfrequenz (f_{R}__{K}) des Fahrzeugaufbaus gegeben ist.

Die Frequenzen der dominierenden Schwingungen des hochpassgefilterten Wegsignals (s_{HP}) werden dagegen bevorzugt anhand der Zeitabstände (Δt₀) der Nulldurchgänge des Betragsverlaufs des hochpassgefilterten Wegsignals (s_{HP}) ermittelt (T/2 = Δt₀).

Nach der Analyse des hochpassgefilterten Wegsignals (s_{HP}) erfolgt die Ermittlung von Adaptionsparametern einer adaptiven Tiefpassfilterung des hochpassgefilterten Wegsignals (s_{HP}) und einer adaptiven Differentiation des hochpass- und tiefpassgefilterten Wegsignals (s_{HP/TP}), die nachfolgend ausgeführt werden.

Im Rahmen der Ermittlung der Adaptionsparameter der adaptiven Tiefpassfilterung kann die Auswahl einer von mehreren Tiefpassfilterfunktionen, wie z.B. einer nichtrekursiven oder rekursiven Filterfunktion (FIR, IIR) oder der Ordnung der Filterfunktion, in Abhängigkeit der Signaleigenschaften der dominierenden Schwingungen des hochpassgefilterten Wegsignals (s_{HP}) erfolgen.

Im wesentlichen beinhaltet die Ermittlung der Adaptionsparameter der adaptiven Tiefpassfilterung jedoch die Bestimmung der die Grenzfrequenz (f_{0_TP}) der verwendeten Tiefpassfilterfunktion kennzeichnenden Filterzeitkonstanten (C₀) in Abhängigkeit von den Signaleigenschaften der dominierenden Schwingungen des hochpassgefilterten Wegsignals (s_{HP}). Hierbei wird die Grenzfrequenz (f_{0_TP}) der verwendeten Tiefpassfilterfunktion, die im Bereich des 1,2-fachen der Eigenfrequenz (f_{R_R}) des Fahrzeugrades liegt, bei Vorliegen niedrigerer Schwingungsamplituden der dominierenden Schwingungen des hochpassgefilterten Wegsignals (s_{HP}) reduziert und bei Vorliegen höherer Schwingungsamplituden erhöht.

Die Ermittlung der Adaptionsparameter der adaptiven Tiefpassfilterung schließt auch die Bestimmung der den Dämpfungsgrad der verwendeten Tiefpassfilterfunktion kennzeichnenden Filterkonstanten (C_{D}) in Abhängigkeit von den Signaleigenschaften der dominierenden Schwingungen des hochpassgefilterten Wegsignals (s_{HP}) ein, wobei der Dämpfungsgrad der verwendeten Tiefpassfilterfunktion bei Vorliegen niedrigerer Schwingungsamplituden der dominierenden Schwingungen des hochpassgefilterten Wegsignals (s_{HP}) erhöht und bei Vorliegen höherer Schwingungsamplituden reduziert wird.

Durch die Reduzierung der Grenzfrequenz (f_{0_TP}) und die Erhöhung des Dämpfungsgrades der verwendeten Tiefpassfilterfunktion bei Vorliegen niedrigerer Schwingungsamplituden wird dem Bedarf nach einer starken Filterung des Wegsignals (s_{HP}) aufgrund des niedrigen Signal/Rausch-Abstands Rechnung getragen. Bei Vorliegen höherer Schwingungsamplituden liegt dagegen ein hoher Signal/Rausch-Abstand vor, so dass die Filterung des Wegsignals (s_{HP}) durch eine Erhöhung der Grenzfrequenz (f_{0_TP}) und eine Verringerung des Dämpfungsgrades der verwendeten Tiefpassfilterfunktion reduziert werden kann.

Die Ermittlung der Adaptionsparameter der adaptiven Differentiation kann, jeweils in Abhängigkeit der Signaleigenschaften der dominierenden Schwingungen des hochpassgefilterten Wegsignals (s_{HP}), die Auswahl einer von mehreren Differentiationsfunktionen, und/oder die Bestimmung des Zeitfensters der verwendeten Differentiationsfunktion, und/oder bei Verwendung einer als Ergebnis einen gewichteten Mittelwert aufweisenden Differentiationsfunktion die Bestimmung der Gewichtungsfaktoren der Differentiationsfunktion beinhalten.

Durch die Auswahl und Adaption der kennzeichnenden Parameter der Tiefpassfilterung und der anschließenden Differentiation in Abhängigkeit der Signaleigenschaften der dominierenden Schwingungen des hochpassgefilterten Wegsignals (s_{HP}) ist eine auf das jeweilige Kraftfahrzeug bzw. die vorliegende Fahrwerksauslegung optimal abgestimmte Ermittlung der Relativgeschwindigkeit (v) der Schwingungsdämpfer möglich. Hierzu können die zur Auswahl stehenden Funktionsparameter, z.B. im Rahmen der Fahrwerksentwicklung, durch eine Eingabe oder Änderung von Tabellen- bzw. Kennlinienwerten manuell vorgegeben oder mittels geeigneter Algorithmen online berechnet werden.

Das erfindungsgemäße Verfahren ergibt eine bessere Trennung der Nutz- und Rauschanteile des Wegsignals (s_{HP}), wodurch insbesondere kleinere Relativgeschwindigkeiten (v) zwischen Fahrzeugaufbau und Fahrzeugrad, also niedrigere Dämpfergeschwindigkeiten erfasst werden können, und somit eine genauere Einstellung der Schwingungsdämpfer bei kleineren Fahrwerksschwingungen möglich ist.

Zur Verdeutlichung der Erfindung ist der Beschreibung eine Zeichnung mit Ausführungsbeispielen beigefügt. In dieser zeigt
- Fig. 1: Ein Ablaufschema des erfindungsgemäßen Verfahrens,
- Fig. 2: eine Darstellung zur Ermittlung des Signalinhalts eines Wegsignals,
- Fig. 3: eine Darstellung zur Wirkung einer variablen Tiefpassfilterung eines Wegsignals,
- Fig. 4: eine Darstellung zur Erläuterung verschiedener Methoden zur Differentiation des Wegsignals, und
- Fig. 5: eine Darstellung zur Erläuterung des verbesserten Ergebnisses des erfindungsgemäßen Verfahrens.

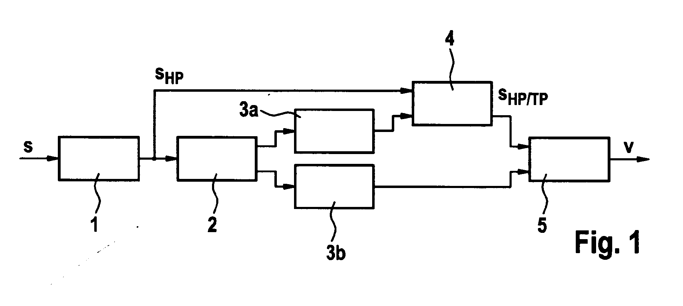

In dem Ablaufschema von Fig. 1 ist der Ablauf des erfindungsgemäßen Verfahrens zur online-Ermittlung eines Geschwindigkeitssignals v aus einem mit einem Konstantanteil oder einer niederfrequenten Signaldrift und einem höherfrequenten Rauschen belasteten Wegsignal s eines Fahrwerkssensors dargestellt.

Demzufolge wird das Eingangssignal s zur Eliminierung eines Konstantanteils oder einer Signaldrift in Schritt 1 hochpassgefiltert, wobei die Grenzfrequenz f_{0_HP} der verwendeten Hochpassfilterfunktion in etwa bei dem 0,1 bis 0,5-fachen der Eigenfrequenz f_{R_K} der fahrzeugspezifschen Aufbauschwingung liegt. In dem nachfolgenden Schritt 2 wird das hochpassgefilterte Wegsignal s_{HP} hinsichtlich der wesentlichen Signaleigenschaften, also der Schwingungsamplituden und Schwingungsfrequenzen der dominierenden Schwingungen des Wegsignals s_{HP}, analysiert. In Abhängigkeit von den ermittelten Signaleigenschaften des hochpassgefilterten Wegsignals s_{HP} werden daraufhin in Schritt 3a die Adaptionsparameter einer adaptiven Tiefpassfilterung des hochpassgefilterten Wegsignals s_{HP} und in Schritt 3b die Adaptionsparameter einer adaptiven Differentiation des hochpass- und tiefpassgefilterten Wegsignals s_{HP/TP} ermittelt. Dabei umfasst die Ermittlung der Adaptionsparameter die Auswahl einer von mehreren Tiefpassfilterfunktionen, einer von mehreren Differentiationsfunktionen, sowie der die Eigenschaften der ausgewählten Funktionen kennzeichnenden Parameter, jeweils in Abhängigkeit der Signaleigenschaften der dominierenden Schwingungen des hochpassgefilterten Wegsignals s_{HP}. Anschließend erfolgt in Schritt S4 die Tiefpassfilterung des hochpassgefilterten Wegsignals s_{HP} mit der ausgewählten und adaptierten Tiefpassfilterfunktion und in Schritt S5 die Differentiation des zuvor tiefpassgefilterten Wegsignals s_{HP/TP} mit der ausgewählten und adaptierten Differentiationsfunktion, wodurch das Geschwindigkeitssignal v der Schwingungsbewegung des betreffenden Schwingungsdämpfers ermittelt ist, das zur aktiven Steuerung des Schwingungsdämpfers vorgesehen ist.

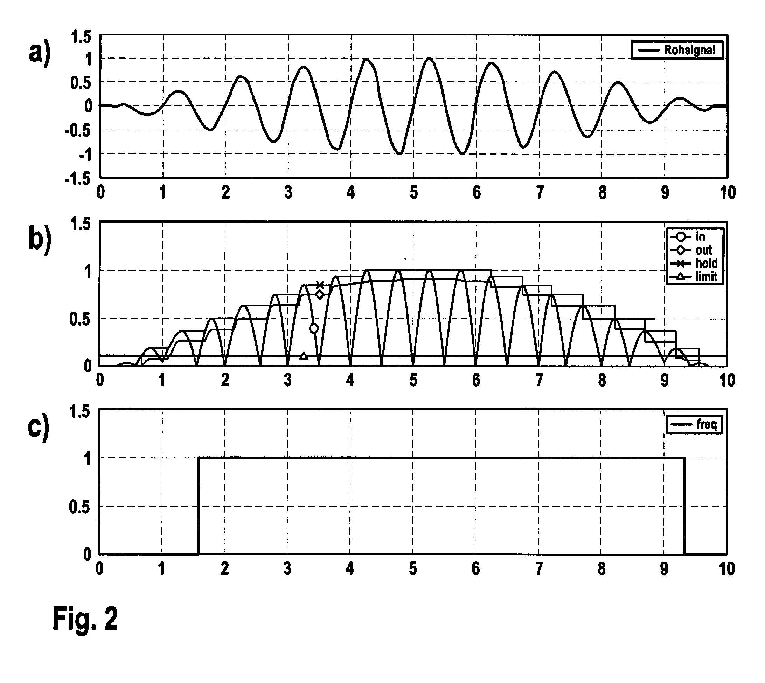

In den Zeitdiagrammen der Fig. 2 ist nun beispielhaft die Analyse des hochpassgefilterten Wegsignals s_{HP} anhand einer auf- und abklingenden Sinusschwingung mit einer Frequenz von 1 Hz veranschaulicht, die in Fig. 2a abgebildet ist. In Fig. 2b wird der Betragsverlauf dieser Sinusschwingung als Eingangssignal ("in") einer Hüllkurve verwendet, mittels der die Amplituden der dominierenden Schwingungen des Eingangssignals, also in der konkreten Anwendung des hochpassgefilterten Wegsignals s_{HP}, ermittelt werden. Die Hüllkurve wird unter Berücksichtigung einer vorgegebenen Toleranzschwelle Δs_{T} und einer vorgegebenen Haltezeit Δt_{H} derart bestimmt, dass das Ausgangssignal ("hold") bei unterhalb der Toleranzschwelle Δs_{T} liegendem Eingangssignal (Wegsignal s_{HP}) gleich Null gesetzt wird, bei außerhalb der Toleranzschwelle Δs_{T} ansteigendem Eingangssignal gleich dem Eingangssignal gesetzt wird, bei außerhalb der Toleranzschwelle Δs_{T} abfallendem Eingangssignal für die festgelegte Haltezeit Δt_{H} auf dem Wert des letzten relativen Maximums gehalten wird, und nach Ablauf der Haltezeit Δt_{H} bei über der Toleranzschwelle Δs_{T} liegendem Eingangssignal auf den aktuellen Wert des Eingangssignals sowie bei unterhalb der Toleranzschwelle Δs_{T} liegendem Eingangssignal auf Null abfällt.

In der Darstellung von Fig. 2b ist das endgültige Ausgangssignal ("out") gegenüber der Hüllkurve ("hold") noch um die Höhe der Toleranzschwelle Δs_{T} abgesenkt, was für die Ermittlung der Signaleigenschaften des Eingangsignals ("in") jedoch ohne Bedeutung ist.

Die Frequenzen der dominierenden Schwingungen des hochpassgefilterten Wegsignals s_{HP}, hier beispielhaft die Frequenz von 1 Hz des Eingangssignals ("in"), werden dagegen anhand der Nulldurchgänge des Betragsverlaufs des Wegsignals s_{HP} ermittelt, was Fig. 2c dargestellt ist. Daraus ist auch ersichtlich, das die Ermittlung der Schwingungsfrequenzen nur bei außerhalb der Toleranzschwelle Δs_{T} liegendem Eingangssignal ("in") erfolgt.

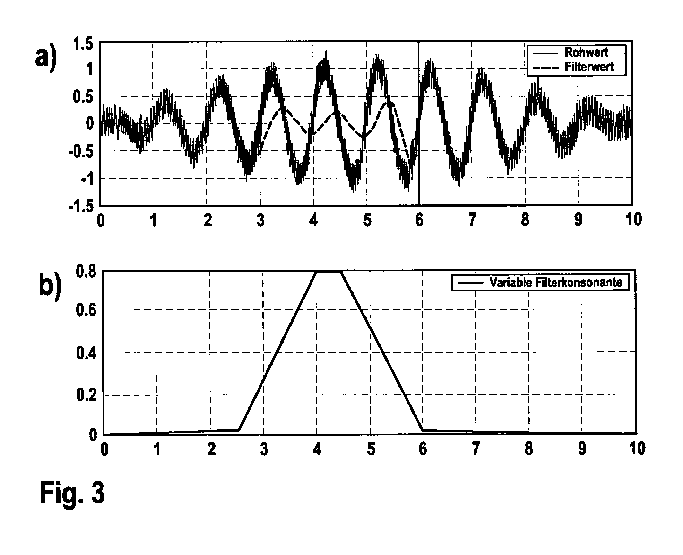

Mit den in Fig. 3 abgebildeten Zeitverläufen ist beispielhaft die Wirkung einer variablen Filterzeitkonstanten C_{0_TP} einer adaptiven Tiefpassfilterung auf das Ausgangssignal dargestellt. Der Zeitverlauf des verrauschten Eingangssignals ("Rohwert") ist Fig. 3a und der Zeitverlauf der Filterzeitkonstanten ("Variable Filterkonstante") in Fig. 3b abgebildet. Anhand des in Fig. 3a dargestellten Verlaufs des gefilterten Ausgangssignals ("Filterwert") ist erkennbar, dass eine ansteigende Filterzeitkonstante C_{0_TP} und eine demzufolge verringerte Grenzfrequenz f_{0_TP} der Tiefpassfilterfunktion neben einer Dämpfung bzw. Verringerung der Signalamplitude zu einer positiven Phasenverschiebung (Phasennacheilung) führt. Es ist daher offensichtlich, dass die Filterzeitkonstante C_{0_TP} möglichst klein gehalten werden sollte, was aber nur bei höheren Schwingungsamplituden des Eingangssignals möglich ist.

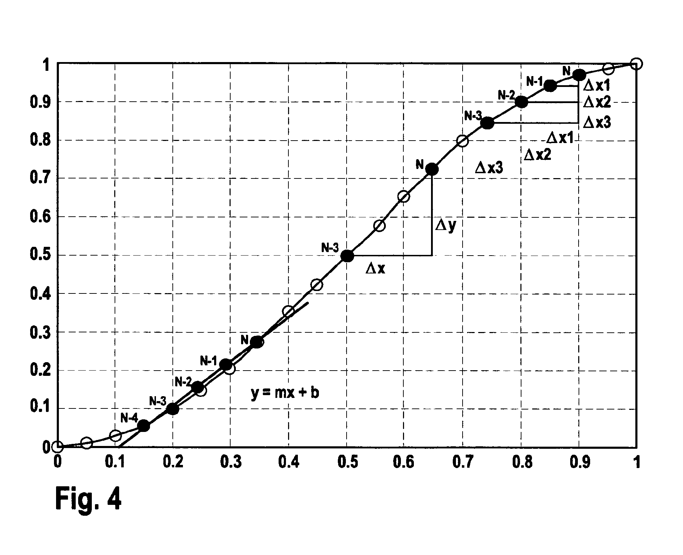

In der Abbildung von Fig. 4 sind drei unterschiedliche Verfahren zur diskreten Differentiation eines Signals, vorliegend des hochpass- und tiefpassgefilterten Wegsignals s_{HP/TP} dargestellt. Im oberen Teil ist ein erstes Verfahren dargestellt, bei dem drei Differenzenquotienten Δx1/Δy1, Δx2/Δy2, Δx3/Δy3 über unterschiedlich große Zeitfenster Δy1, Δy2, Δy3 gebildet und nachfolgend gemittelt werden, was ungewichtet oder gewichtet erfolgen kann. Im mittleren Teil von Fig. 4 ist ein zweites Verfahren mit einem einzigen Differenzenquotienten Δx/Δy veranschaulicht, dessen Zeitfenster Δy variiert werden kann. In einem im unteren Teil von Fig. 4 dargestellten dritten Verfahren wird zwischen zwei Wertepaaren (x_{N}, y_{N}), (x_{N-3}, y_{N-3}) linear interpoliert, wobei das Zeitfenster Δy = (y_{N} - y_{N-3}) zwischen den verwendeten Wertepaaren variiert werden kann. Die Auswahl des verwendeten Differentiationsverfahrens, der verwendeten Gewichtungsfaktoren und des bzw. der verwendeten Zeitfenster ist Gegenstand der Ermittlung der Adaptionsparameter des Differentiationsverfahrens in Schritt 3b und erfolgt in Abhängigkeit der Signaleigenschaften der dominierenden Schwingungen des hochpassgefilterten Wegsignals SHP.

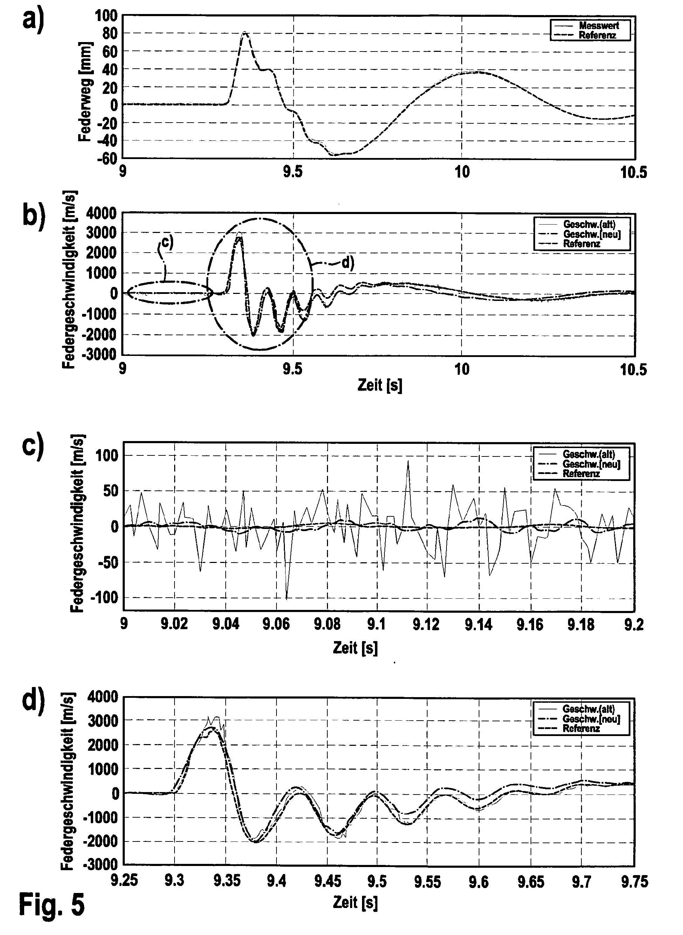

Die Vorteile des erfindungsgemäßen Verfahrens ("neu") gehen im Vergleich zu einem konventionellen Verfahren ("alt") aus den in Fig. 5 abgebildeten Zeitverläufen hervor. In Fig. 5a ist die sensorisch erfasste Auslenkung eines Schwingungsdämpfers (Wegsignal s, "Messwert") abgebildet, die eine stoßartige Schwingungsanregung erkennen lässt. In Fig. 5b ist das mit dem erfindungsgemäßen Verfahren daraus abgeleitete Geschwindigkeitssignal v ("Geschw. (neu)") im Vergleich mit einem mit einem bislang üblichen Verfahren ermittelten Geschwindigkeitssignal ("Geschw. (alt)") dargestellt. Wie in dem vergrößerten Ausschnitt c) von Fig. 5b in Fig. 5c erkennbar ist, bewirkt das erfindungsgemäße Verfahren im Gegensatz zu dem bisherigen Verfahren eine wirksame Rauschunterdrückung im Kleinsignalbereich. Ebenso ergibt das erfindungsgemäße Verfahren einen amplituden- und phasentreuen Verlauf des Geschwindigkeitssignals im Großsignalbereich, was in dem vergrößerten Ausschnitt d) von Fig. 5b in Fig. 5d erkennbar ist. In den Teilen b, c, d der Fig. 5 ist jeweils der richtige Verlauf der durch das Geschwindigkeitssignal wiedergegeben Dämpfergeschwindigkeit als Referenz eingezeichnet.

### Bezugszeichen (Teil der Beschreibung)

| | |
|---|---|
| C_{D} | Filterkonstante (einer Filterfunktion) |
| C₀ | Filterzeitkonstante (einer Filterfunktion) |
| C_{0_TP} | Filterzeitkonstante (einer Tiefpassfilterfunktion) |
| f_{0-HP} | Grenzfrequenz (einer Hochpassfilterung) |
| f_{0_TP} | Grenzfrequenz (einer Tiefpassfilterung) |
| f_{R_K} | Eigenfrequenz (eines Fahrzeugaufbaus) |
| f_{R_R} | Eigenfrequenz (eines Fahrzeugrades) |
| N | Ordnungszahl eines diskreten Wertes |
| N-1 | Ordnungszahl eines diskreten Wertes |
| N-2 | Ordnungszahl eines diskreten Wertes |
| N-3 | Ordnungszahl eines diskreten Wertes |
| N-4 | Ordnungszahl eines diskreten Wertes |
| s | Wegsignal, Dämpferauslenkung (ungefiltert) |
| s_{HP} | Wegsignal (hochpassgefiltert) |
| s_{HP/TP} | Wegsignal (hochpass- und tiefpassgefiltert) |
| T | Schwingungsdauer |
| T_{R_K} | Schwingungsdauer (der Eigenfrequenz eines Fahrzeugaufbaus) |
| v | Geschwindigkeitssignal, Dämpfergeschwindigkeit (berechnet) |
| v | Geschwindigkeitssignal, Dämpfergeschwindigkeit (berechnet) |
| x_{N} | Diskreter Wegwert |
| x_{N-1} | Diskreter Wegwert |
| x_{N-2} | Diskreter Wegwert |
| x_{N-3} | Diskreter Wegwert |
| x_{N-4} | Diskreter Wegwert |
| y_{N} | Diskreter Zeitwert |
| y_{N-1} | Diskreter Zeitwert |
| y_{N-2} | Diskreter Zeitwert |
| y_{N-3} | Diskreter Zeitwert |
| Y_{N-4} | Diskreter Zeitwert |

| | |
|---|---|
| Δt₀ | Δt_{H} Haltezeit (einer Hüllkurve) Zeitabstand (von Nulldurchgängen eines Schwingungssignals) |
| Δx | Wegdifferenz |
| Δx1 | Wegdifferenz |
| Δx2 | Wegdifferenz |
| Δx3 | Wegdifferenz |
| Δy | Zeitdifferenz, Zeitfenster |
| Δy1 | Zeitdifferenz |
| Δy2 | Zeitdifferenz |
| Δy3 | Zeitdifferenz |

## Patentansprüche

1. Verfahren zur Steuerung eines Kraftfahrzeug-Fahrwerks, bei dem zumindest an einer Fahrzeugsachse an der Radaufhängung jedes Fahrzeugrades jeweils ein Schwingungsdämpfer mit verstellbarer Dämpfungskraft zwischen der ungefederten Masse des Fahrzeugrades und der gefederten Masse des Fahrzeugaufbaus und parallel dazu ein Wegsensor zur Erfassung des Dämpferwegs angeordnet ist, wobei zur adaptiven Steuerung der Dämpfungskraft des Schwingungsdämpfers aus dem erfassten Wegsignal des Wegsensors ein Geschwindigkeitssignal abgeleitet wird, **dadurch gekennzeichnet, dass** zur Ableitung des Geschwindigkeitssignals (v) aus dem Wegsignal (s) die folgenden Schritte durchgeführt werden:
a) Hochpassfilterung des Wegsignals (s → s_{HP}),
b) Analyse des hochpassgefilterten Wegsignals (s_{HP}),
ca) Ermittlung von Adaptionsparametern einer adaptiven Tiefpassfilterung des hochpassgefilterten Wegsignals (s_{HP}),
cb) Ermittlung von Adaptionsparametern einer adaptiven Differentiation des hochpass- und tiefpassgefilterten Wegsignals (s_{HP/TP}),
d) Adaptive Tiefpassfilterung des hochpassgefilterten Wegsignals (s_{HP} → s_{HP/TP}),
e) Adaptive Differentiation des hochpass- und tiefpassgefilterten Wegsignals (s_{HP/TP} → v).

2. Verfahren nach Anspruch 1, **dadurch gekennzeichnet, dass** zur Hochpassfilterung des Wegsignals (s) eine lineare Hochpassfilterfunktion 1. Ordnung verwendet wird.

3. Verfahren nach Anspruch 1 oder 2, **dadurch gekennzeichnet, dass** die Grenzfrequenz (f_{0_HP}) des zur Hochpassfilterung des Wegsignals (s) verwendeten Hochpassfilterfunktion in etwa bei dem 0,1 bis 0,5-fachen der Eigenfrequenz (f_{R_K}) des Fahrzeugaufbaus liegt.

4. Verfahren nach einem der Ansprüche 1 bis 3, **dadurch gekennzeichnet, dass** die Analyse des hochpassgefilterten Wegsignals (s_{HP}) die Ermittlung der Signaleigenschaften, beispielsweise Schwingungsamplituden und Schwingungsfrequenzen, der dominierenden Schwingungen des Wegsignals (s_{HP}) beinhaltet.

5. Verfahren nach Anspruch 4, **dadurch gekennzeichnet, dass** die Amplituden der dominierenden Schwingungen des hochpassgefilterten Wegsignals (s_{HP}) aus einer Hüllkurve ermittelt wird, die aus dem Betragsverlauf des hochpassgefilterten Wegsignals (s_{HP}) abgeleitet wird, indem das durch die Hüllkurve gebildete Ausgangssignal bei unterhalb einer festgelegten Toleranzschwelle (Δs_{T}) liegendem Eingangssignal (Wegsignal s_{HP}) gleich Null gesetzt wird, bei außerhalb der Toleranzschwelle (Δs_{T}) ansteigendem Eingangssignal gleich dem Eingangssignal gesetzt wird, bei außerhalb der Toleranzschwelle (Δs_{T}) abfallendem Eingangssignal für eine festgelegte Haltezeit (Δt_{H}) auf dem Wert des letzten relativen Maximums gehalten wird, und nach Ablauf der Haltezeit (Δt_{H}) bei über der Toleranzschwelle (Δs_{T}) liegendem Eingangssignal auf den aktuellen Wert des Eingangssignals und bei unterhalb der Toleranzschwelle (Δs_{T}) liegendem Eingangssignal auf Null abfällt.

6. Verfahren nach Anspruch 5, **dadurch gekennzeichnet, dass** die Haltezeit (Δt_{H}) der Hüllkurve etwas größer als die halbe Schwingungsdauer (T_{R_K}) der kleinsten relevanten Schwingungsfrequenz (f_{R_K}) festgelegt ist.

7. Verfahren nach einem der Ansprüche 4 bis 6, **dadurch gekennzeichnet, dass** die Frequenzen der dominierenden Schwingungen des hochpassgefilterten Wegsignals (s_{HP}) anhand der Zeitabstände (Δt₀) der Nulldurchgänge des Betragsverlaufs des hochpassgefilterten Wegsignals (s_{HP}) ermittelt werden.

8. Verfahren nach einem der Ansprüche 1 bis 7, **dadurch gekennzeichnet, dass** die Ermittlung der Adaptionsparameter der adaptiven Tiefpassfilterung die Auswahl einer von mehreren Tiefpassfilterfunktionen in Abhängigkeit der Signaleigenschaften der dominierenden Schwingungen des hochpassgefilterten Wegsignals (s_{HP}) beinhaltet.

9. Verfahren nach einem der Ansprüche 1 bis 8, **dadurch gekennzeichnet, dass** die Ermittlung der Adaptionsparameter der adaptiven Tiefpassfilterung die Bestimmung der die Grenzfrequenz (f_{0_TP}) der verwendeten Tiefpassfilterfunktion kennzeichnenden Filterzeitkonstanten (C₀) in Abhängigkeit der Signaleigenschaften der dominierenden Schwingungen des hochpassgefilterten Wegsignals (s_{HP}) beinhaltet.

10. Verfahren nach Anspruch 9, **dadurch gekennzeichnet, dass** die Grenzfrequenz (f_{0-TP}) der verwendeten Tiefpassfilterfunktion bei Vorliegen niedrigerer Schwingungsamplituden der dominierenden Schwingungen des hochpassgefilterten Wegsignals (s_{HP}) reduziert und bei Vorliegen höherer Schwingungsamplituden erhöht wird.

11. Verfahren nach einem der Ansprüche 1 bis 10, **dadurch gekennzeichnet, dass** die Ermittlung der Adaptionsparameter der adaptiven Tiefpassfilterung die Bestimmung der den Dämpfungsgrad der verwendeten Tiefpassfilterfunktion kennzeichnenden Filterkonstanten (C_{D}) in Abhängigkeit der Signaleigenschaften der dominierenden Schwingungen des hochpassgefilterten Wegsignals (s_{HP}) beinhaltet.

12. Verfahren nach Anspruch 11, **dadurch gekennzeichnet, dass** der Dämpfungsgrad der verwendeten Tiefpassfilterfunktion bei Vorliegen niedrigerer Schwingungsamplituden der dominierenden Schwingungen des hochpassgefilterten Wegsignals (s_{HP}) erhöht und bei Vorliegen höherer Schwingungsamplituden reduziert wird.

13. Verfahren nach einem der Ansprüche 1 bis 12, **dadurch gekennzeichnet, dass** die Ermittlung der Adaptionsparameter der adaptiven Differentiation die Auswahl einer von mehreren Differentiationsfunktionen in Abhängigkeit der Signaleigenschaften der dominierenden Schwingungen des hochpassgefilterten Wegsignals (s_{HP}) beinhaltet.

14. Verfahren nach einem der Ansprüche 1 bis 13, **dadurch gekennzeichnet, dass** die Ermittlung der Adaptionsparameter der adaptiven Differentiation die Bestimmung des Zeitfensters der verwendeten Differentiationsfunktion in Abhängigkeit der Signaleigenschaften der dominierenden Schwingungen des hochpassgefilterten Wegsignals (s_{HP}) beinhaltet.

15. Verfahren nach einem der Ansprüche 1 bis 14, **dadurch gekennzeichnet, dass** die Ermittlung der Adaptionsparameter der adaptiven Tiefpassfilterung bei Verwendung einer als Ergebnis einen gewichteten Mittelwert aufweisenden Differentiationsfunktion die Bestimmung der Gewichtungsfaktoren der Differentiationsfunktion in Abhängigkeit der Signaleigenschaften der dominierenden Schwingungen des hochpassgefilterten Wegsignals (s_{HP}) beinhaltet.

## Claims

1. Method for controlling a motor vehicle chassis in which in each case one oscillation damper with an adjustable damping force is arranged at least on one vehicle axle on the wheel suspension means of each vehicle wheel, between the unsprung mass of the vehicle wheel and the sprung mass of the vehicle body, and parallel thereto a travel sensor for sensing the damper travel is arranged, wherein a velocity signal is derived from the sensed travel signal of the travel sensor in order to adaptively control the damping force of the oscillation damper, **characterized in that** the following steps are carried out in order to derive the velocity signal (v) from the travel signal (s):
a) high pass filtering of the travel signal (s → s_{HP}),
b) analysis of the high-pass-filtered travel signal (s_{HP}),
ca) determination of adaptation parameters of adaptive low pass filtering of the high-pass-filtered travel signal (s_{HP}),
cb) determination of adaptation parameters of adaptive differentiation of the high-pass-filtered and low-pass-filtered travel signal (s_{HP/TP}),
d) adaptive low pass filtering of the high-pass-filtered travel signal (s_{HP} → s_{HP/TP}), and
e) adaptive differentiation of the high-pass-filtered and low-pass-filtered travel signal (s_{HP/TP} → v).

2. The method according to Claim 1, **characterized in that** a linear high pass filter function of the first order is used for high pass filtering of the travel signal (s).

3. Method according to Claim 1 or 2, **characterized in that** the cut-off frequency (f_{0_HP}) of the high pass filter function used for high pass filtering of the travel signal (s) is approximately 0.1 to 0.5 times the natural frequency (f_{R_K}) of the vehicle body.

4. Method according to one of Claims 1 to 3, **characterized in that** the analysis of the high-pass-filtered travel signal (s_{HP}) includes determination of the signal properties, for example oscillation amplitudes and oscillation frequencies, of the dominant oscillations of the travel signal (s_{HP}).

5. Method according to Claim 4, **characterized in that** the amplitudes of the dominant oscillations of the high-pass-filtered travel signal (s_{HP}) are determined from an envelope curve which is derived from the absolute value profile of the high-pass-filtered travel signal (s_{HP}), **in that** the output signal which is formed by the envelope curve is set to be equal to zero when the input signal (travel signal (s_{HP}) is below a defined tolerance threshold (Δs_{T}), is set to be equal to the input signal when the input signal rises outside the tolerance threshold (Δs_{T}), is held at the value of the last relative maximum value for a defined holding time (Δt_{H}) when the input signal drops outside the tolerance threshold (Δs_{T}), and after the expiry of the holding time (Δt_{H}) said output signal drops to the current value of the input signal when the input signal is above the tolerance threshold (Δs_{T}), and drops to zero when the input signal is below the tolerance threshold (Δs_{T}).

6. Method according to Claim 5, **characterized in that** the holding time (Δt_{H}) of the envelope curve is defined to be somewhat longer than half the oscillation period (T_{R_K}) of the lowest relevant oscillation frequency (f_{R_K}).

7. Method according to one of Claims 4 to 6, **characterized in that** the frequencies of the dominant oscillations of the high-pass-filtered travel signal (s_{HP}) are determined on the basis of the time intervals (Δt₀) of the zero crossovers of the absolute value profile of the high-pass-filtered travel signal (s_{HP}).

8. Method according to one of Claims 1 to 7, **characterized in that** the determination of the adaptation parameters of the adaptive low pass filtering includes the selection of one of a plurality of low pass filter functions on the basis of the signal properties of the dominant oscillations of the high-pass-filtered travel signal (s_{HP}).

9. Method according to one of Claims 1 to 8, **characterized in that** the determination of the adaptation parameters of the adaptive low pass filtering includes the definition of the filter time constants (C₀), which characterize the cut-off frequency (f_{0_TP}) of the low pass filter function used, on the basis of the signal properties of the dominant oscillations of the high-pass-filtered travel signal (s_{HP}).

10. Method according to Claim 9, **characterized in that** the cut-off frequency (f_{0_TP}) of the low pass filter function used is reduced when relatively low oscillation amplitudes of the dominant oscillations of the high-pass-filtered travel signal (s_{HP}) are present, and is increased when relatively high oscillation amplitudes are present.

11. Method according to one of Claims 1 to 10, **characterized in that** the determination of the adaptation parameters of the adaptive low pass filtering includes the definition of the filter constants (C_{D}) which characterize the degree of attenuation of the low pass filter function used, on the basis of the signal properties of the dominant oscillations of the high-pass-filtered travel signal (s_{HP}).

12. Method according to Claim 11, **characterized in that** the degree of attenuation of the low pass filter function used is increased when relatively low oscillation amplitudes of the dominant oscillations of the high-pass-filtered travel signal (s_{HP}) are present, and is reduced when relatively high oscillation amplitudes are present.

13. Method according to one of Claims 1 to 12, **characterized in that** the determination of the adaptation parameters of the adaptive differentiation includes the selection of one of a plurality of differentiation functions on the basis of the signal properties of the dominant oscillations of the high-pass-filtered travel signal (s_{HP}).

14. Method according to one of Claims 1 to 13, **characterized in that** the determination of the adaptation parameters of the adaptive differentiation includes the definition of the time window of the differentiation function used, on the basis of the signal properties of the dominant oscillations of the high-pass-filtered travel signal (s_{HP}).

15. Method according to one of Claims 1 to 14, **characterized in that** the determination of the adaptation parameters of the adaptive low pass filtering when a differentiation function which has a weighted mean value as a result is used includes the definition of the weighting factors of the differentiation function on the basis of the signal properties of the dominant oscillations of the high-pass-filtered travel signal (s_{HP}).

## Revendications

1. Procédé de commande d'un châssis de véhicule automobile dans lequel un amortisseur de vibrations à force d'amortissement réglable est disposé au moins sur un essieu et sur la suspension de chaque roue du véhicule entre la masse non suspendue de la roue du véhicule et la masse suspendue de la caisse du véhicule et un capteur de course destiné à détecter la course d'amortissement est disposé en parallèle à celui-ci, un signal de vitesse étant déduit du signal de course détecté par le capteur de course pour la commande adaptative de la force d'amortissement de l'amortisseur de vibrations, **caractérisé en ce que** les étapes suivantes sont effectuées pour l'obtention du signal de vitesse (v) à partir du signal de course (s) :
a) filtrage passe-haut du signal de course (s → s_{HP}),
b) analyse du signal de course filtré par filtrage passe-haut (s_{HP}),
ca) obtention de paramètres d'adaptation d'un filtrage passe-bas adaptatif du signal de course filtré par filtrage passe-haut (s_{HP}),
cb) obtention de paramètres d'adaptation d'une différentiation adaptative du signal de course filtré par filtrage passe-haut et par filtrage passe-bas (s_{HP/TP}),
d) filtrage passe-bas adaptatif du signal de course filtré par filtrage passe-haut (s_{HP}→ S_{HP/TP}),
e) différentiation adaptative du signal de course filtré par filtrage passe-haut et par filtrage passe-bas (s_{HP/TP} → v).

2. Procédé selon la revendication 1, **caractérisé en ce qu'**une fonction de filtrage passe-haut d'ordre 1 est utilisée pour le filtrage passe-haut du signal de course (s).

3. Procédé selon la revendication 1 ou 2, **caractérisé en ce que** la fréquence de coupure (f_{0_HP}) de la fonction de filtrage passe-haut utilisée pour le filtrage passe-haut du signal de course (s) se situe approximativement dans l'intervalle de 0,1 à 0,5 fois la fréquence propre (f_{R_K}) de la caisse du véhicule.

4. Procédé selon l'une des revendications 1 à 3, **caractérisé en ce que** l'analyse du signal de course filtré par filtrage passe-haut (s_{HP}) comprend l'obtention de propriétés du signal, par exemple d'amplitudes de vibration et de fréquences de vibration des vibrations dominantes du signal de course (s_{HP}).

5. Procédé selon la revendication 4, **caractérisé en ce que** les amplitudes des vibrations dominantes du signal de course filtré par filtrage passe-haut (s_{HP}) sont obtenues à partir d'une enveloppe qui est déduite de la courbe de valeurs du signal de course filtré par filtrage passe-haut (s_{HP}), le signal de sortie formé à partir de la courbe d'enveloppe étant mis à zéro lorsque le signal d'entrée (signal de course _{HP}) se situe en dessous d'un seuil de tolérance fixé (Δs_{T}), étant mis à une valeur égale au signal d'entrée lorsque le signal d'entrée franchit le seuil de tolérance (Δs_{T}) en sens croissant, étant mis à la valeur du dernier maximum relatif lorsque le signal d'entrée franchit le seuil de tolérance (Δs_{T}) en sens décroissant pendant un temps de maintien fixé (Δt_{H}) et, après que le temps de maintien (Δt_{H}) se soit écoulé, le signal de sortie s'abaissant à la valeur actuelle du signal d'entrée lorsque le signal d'entrée est supérieur au seuil de tolérance (Δs_{T}), et à zéro lorsque le signal d'entrée est inférieur au seuil de tolérance (Δs_{T}).

6. Procédé selon la revendication 5, **caractérisé en ce que** le temps de maintien (Δt_{H}) de l'enveloppe est fixé à une valeur supérieure à la moitié de la période de vibration (T_{R_K}) de la fréquence de vibration (f_{R_K}) pertinente la plus petite.

7. Procédé selon l'une des revendications 4 à 6, **caractérisé en ce que** les fréquences des vibrations dominantes du signal de course filtré par filtrage passe-haut (s_{HP}) sont obtenues sur la base des intervalles de temps (Δt₀) des passages à zéro de la courbe de valeurs du signal de course (s_{HP}) filtré par filtrage passe-haut.

8. Procédé selon l'une des revendications 1 à 7, **caractérisé en ce que** l'obtention des paramètres d'adaptation du filtrage passe-bas adaptatif comprend la sélection de l'une de plusieurs fonctions de filtrage passe-bas en fonction des propriétés de signal des vibrations dominantes du signal de course (s_{HP}) filtré par filtrage passe-haut.

9. Procédé selon l'une des revendications 1 à 8, **caractérisé en ce que** l'obtention des paramètres d'adaptation du filtrage passe-bas adaptatif comprend la détermination des constantes de temps de filtrage (C₀) caractérisant la fréquence de coupure (f_{0_TP}) de la fonction de filtrage passe-bas utilisée en fonction des propriétés de signal des vibrations dominantes du signal de course filtré par filtrage passe-haut (s_{HP}).

10. Procédé selon la revendication 9, **caractérisé en ce que** la fréquence de coupure (f_{0_TP}) de la fonction de filtrage passe-bas utilisée est réduite lorsque les amplitudes des vibrations dominantes du signal de course filtré par filtrage passe-haut (s_{HP}) diminuent et est augmentée lorsque les amplitudes de vibrations augmentent.

11. Procédé selon l'une des revendications 1 à 10, **caractérisé en ce que** l'obtention des paramètres d'adaptation du filtrage passe-bas comprend la détermination des constantes de filtrage (C_{D}) caractérisant le taux d'amortissement de la fonction de filtrage passe-bas utilisée en fonction des propriétés de signal des vibrations dominantes du signal de course filtré par filtrage passe-haut (S_{HP}).

12. Procédé selon la revendication 11, **caractérisé en ce que** le taux d'affaiblissement de la fonction de filtrage passe-bas utilisée est augmenté lorsque les amplitudes des vibrations dominantes du signal de course filtré par filtrage passe-haut (S_{HP}) diminuent et est réduit lorsque les amplitudes des vibrations augmentent.

13. Procédé selon l'une des revendications 1 à 12, **caractérisé en ce que** l'obtention des paramètres d'adaptation de la différentiation adaptative comprend la sélection de l'une de plusieurs fonctions de différentiation en fonction des propriétés de signal des vibrations dominantes du signal de course filtré par filtrage passe-haut (S_{HP}).

14. Procédé selon l'une des revendications 1 à 13, **caractérisé en ce que** l'obtention des paramètres d'adaptation de la différentiation adaptative comprend la détermination de la fenêtre temporelle de la fonction de différentiation utilisée en fonction des propriétés de signal des vibrations dominantes du signal de course filtré par filtrage passe-haut (S_{HP}).

15. Procédé selon l'une des revendications 1 à 14, **caractérisé en ce que** l'obtention des paramètres d'adaptation du filtrage passe-bas adaptatif comprend, lors de l'utilisation d'une fonction de différentiation dont le résultat est une valeur moyenne pondérée, la détermination des facteurs de pondération de la fonction de différentiation en fonction des propriétés de signal des vibrations dominantes du signal de course filtré par filtrage passe-haut (S_{HP}).
